(19)

**Europäisches Patentamt**

**European Patent Office**

**Office européen des brevets**

(11) **EP 0 992 505 A2**

(12) **EUROPÄISCHE PATENTANMELDUNG**

(43) Veröffentlichungstag:
**12.04.2000 Patentblatt 2000/15**

(51) Int. Cl.$^7$: **C07F 7/18**, C08K 5/54,
C08L 21/00

(21) Anmeldenummer: **99117737.9**

(22) Anmeldetag: **09.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.09.1998 DE 19844607**

(71) Anmelder:
**Degussa-Hüls Aktiengesellschaft**
**60287 Frankfurt am Main (DE)**

(72) Erfinder:
• **Batz-Sohn, Christioph, Dr.**
 **63452 Hanau (DE)**
• **Luginsland, Hans-Detlef, Dr.**
 **50968 Köln (DE)**

(54) **Sulfanylsilane**

(57) Sulfanylsilane mit der Formel $X^1X^2X^3Si\text{-}A\text{-}S\text{-}SiR^1R^2R^3$ werden herstellt, indem man Mercaptosilane der Formel $X_1X_2X_3Si\text{-}Alkyl\text{-}SH$ mit Chlorsilanen $Cl\text{-}SiR_1R_2R_3$ umsetzt.

Sie werden als Haftvermittler in Kautschukmischungen eingesetzt.

EP 0 992 505 A2

**Beschreibung**

Die Erfindung betrifft Sulfanylsilane, ein Verfahren zu ihrer Herstellung sowie ihre Verwendung.

Es ist bekannt, schwefelhaltige Organosiliciumverbindungen, wie 3-Mercaptopropyltrimethoxysilan oder Bis-(3-[Triethoxysilyl]-propyl)tetrasulfan, als Silanhaftvermittler oder Verstärkungsadditiv in oxidisch gefüllten Kautschukmischungen, unter anderem für Laufflächen und andere Teile von Autoreifen, einzusetzen (DE 21 41 159, DE 22 12 239, US 3,978,103, US 4,048,206).

Des weiteren ist bekannt, daß schwefelhaltige Silanhaftvermittler bei der Herstellung von Dichtungsmassen, Gießformen für den Metallguß, Farb- und Schutzanstrichen, Klebstoffen, Asphaltmischungen und oxidisch gefüllten Kunststoffen eingesetzt werden.

Weitere Anwendungsmöglichkeiten sind bei der Fixierung von Wirkstoffen und funktionellen Einheiten auf anorganischen Trägermaterialien, zum Beispiel bei der Immobilisierung von homogenen Katalysatoren und Enzymen, bei der Herstellung von Festbettkatalysatoren und bei der Flüssigkeitschromatographie bekannt.

Die Verwendung von Mercaptosilanen in Kautschukmischungen für Reifenlaufflächen ist aus der Patentschrift FR-A-2.094.859 bekannt. Die bekannten Mercaptosilane und insbesondere das -3-Mercaptopropyltrimethoxysilan und das 3-Mercaptopropyltriethoxysilan sind in der Lage, verbesserte Eigenschaften der Kupplung Kieselsäure/Elastomer herbeizuführen. Die industrielle Verwendung dieser ist wegen der hohen Reaktivität der SH-Gruppen nicht möglich, weil sie bei der Mischungsherstellung sehr schnell zu einer Vorvulkanisation, auch Pre-Scorch genannt, mit sehr stark erhöhter Mooney-Plastizität und letzten Endes zu Mischungen führen, die quasi unmöglich zu verarbeiten und industriell einzusetzen sind.

Für andere Anwendungen wie z.B. technische Gummiartikel, die anders verarbeitet werden, können Mercaptosilane als Verstärkungsadditiv eingesetzt werden. Allerdings erweist sich der fast allen organischen Mercaptanen eigene, äußerst unangenehme und durchdringende Geruch dieser Verbindungen als Problem, welches bisher durch apparative Maßnahmen nur abgemildert werden kann.

Aus dem oben genannten Grund des Pre-Scorch verwendet man als Kupplungsagens für Reifenteile meist polysulfidische Organosilane, darunter das Bis-3-triethoxysilylpropyltetrasulfan oder das Bis-3-triethoxysilylpropyldisulfan (DE 25 42 534, DE 24 05 758, DE 195 41 404, DE 197 34 295), die der beste Kompromiss für kieselsäuregefüllte Vulkanisate in Bezug auf Vulkanisationssicherheit, einfacher Herstellung und Verstärkungsleistung zu sein scheinen. Allerdings müssen diese Kupplungsreagenzien in relativ großer Menge eingesetzt werden. Ungefähr 2 bis 3 mal soviel wie die Menge des 3-Mercaptopropyltrimethoxysilan sind notwendig, um ein äquivalentes Niveau der Kupplungseigenschaften zu erzielen. Dieser Nachteil führte zu einigen Versuchen, die verarbeitungstechnischen Schwierigkeiten bei der Verwendung der im Sinne der Verstärkungseigenschaften besseren Mercaptosilane zu umgehen. Ein Versuch in diesem Sinn wird im Patent US-A-4.474.908 beschrieben. Aber dieser Weg ergab hinsichtlich Anvulkanisations- und Verarbeitungsproblemen kein zufriedenstellendes Ergebnis und ist zudem kostspielig. Weiterhin wird in der Patentschrift EP 0 784 072 A1 die Verwendung von funktionellen Polyorganosiloxanen zusätzlich zum Mercaptosilan beschrieben, welches erstmals die Verarbeitung von Mercaptosilanen als Verstärkungsadditiv in Kautschukmischungen für Reifenlaufflächen ermöglicht.

Gegenstand der Erfindung sind Sulfanylsilane, welche dadurch gekennzeichnet sind, daß sie der Formel I

$$X^1X^2X^3Si\text{-}A\text{-}S\text{-}SiR^1R^2R^3 \tag{I}$$

entsprechen, wobei

$X^1, X^2, X^3$     unabhängig voneinander, H, $(C_1\text{-}C_8)$Alkyl, $(C_1\text{-}C_8)$Alkoxy, $(C_1\text{-}C_4)$Haloalkyl, Aryl, $(C_7\text{-}C_{16})$Aralkyl, Halogen, $\text{-}A\text{-}S\text{-}SiR^1R^2R^3$

$R^1, R^2, R^3$     unabhängig voneinander, H, $(C_1\text{-}C_{16})$ Alkyl, $(C_1\text{-}C_{16})$Alkoxy, $(C_1\text{-}C_{16})$Haloalkyl, Aryl, $(C_7\text{-}C_{16})$Aralkyl, Halogen, $X^1X^2X^3\text{-}A\text{-}S$

A     $(C_1\text{-}C_{16})$Alkyl, das jeweiils linear oder verzweigt gesättigt oder ungesättigt und gegebenenfalls mit $(C_1\text{-}C_4)$Alkyl, $(C_1\text{-}C_4)$Alkoxy, Halogen, Nitril, $(C_1\text{-}C_4)$Haloalkyl, $NO_2$, $(C_1\text{-}C_4)$Thioalkyl, $NR^1R^2$, $\text{-}A\text{-}S\text{-}SiR^1R^2R^3$ oder $X^1X^2X^3\text{-}A\text{-}$, substituiert sein kann, Aryl oder $(C_7\text{-}C_{16})$Aralkyl,

bedeuten kann.

Die erfindungsgemäßen Sulfanylsilane können dadurch gekennzeichnet sein, daß

$X^1, X^2, X^3$     unabhängig voneinander, $(C_1\text{-}C_4)$Alkyl, $(C_1\text{-}C_4)$Alkoxy, Halogen

$R^1$, $R^2$, $R^3$    unabhängig voneinander, $(C_1-C_4)$Alkyl, $(C_1-C_4)$Alkoxy, Halogen oder $X^1X^2X^3$Si-A-S
und

A    $(C_1-C_4)$Alkyl

bedeuten.

Die erfindungsgemäßen Sulfanylsilane können weiterhin dadurch gekennzeichnet sein, daß

$X^1$, $X^2$, $X^3$    unabhängig voneinander, Methoxy oder Ethoxy,

$R^1$, $R^2$, $R^3$    unabhängig voneinander, Methyl oder $X^1X^2X^3$Si-A-S
und

A    Propyl

bedeuten.

Unter der Bezeichnung "Alkyl" sind sowohl "geradkettige" als auch "verzweigte" Alkylgruppen zu verstehen. Unter der Bezeichnung "geradkettige Alkylgruppe" sind beispielsweise Reste wie Methyl-, Ethyl-, n-Propyl, n-Butyl, n-Pentyl, n-Hexyl, unter "verzweigter Alkylgruppe" Reste wie beispielsweise Isopropyl oder tert.-Butyl zu verstehen. Die Bezeichnung Halogen steht für Fluor, Chlor, Brom oder Jod. Die Bezeichnung "Alkoxy" stellt Reste wie beispielsweise Methoxy, Ethoxy, Propoxy, Butoxy, Isopropoxy, Isobutoxy oder Pentoxy dar.

Unter "Aryl" sind im erfindungsgemäßen Rahmen Phenyle, Biphenyle oder sonstige benzoide Verbindungen zu verstehen, die gegebenenfalls mit $(C_1 - C_3)$alkyl-, $(C_1 - C_3)$alkoxy-, halogen-, hydroxy- oder mit Heteroatomen wie $NR^1R^2OR^1$, $PR^1R^2R^3$ oder $SR^1$ substituiert sind. "Aralkyl" ist so zu verstehen, daß die oben bezeichneten "Aryle" über eine $(C_1 - C_6)$Alkylkette, die ihrerseits $(C_1 - C_3)$alkyl-, $(C_1-C_3)$alkoxy- oder halogensubstituiert sein kann, mit dem entsprechenden Siliciumatom oder Schwefelatom oder mit beiden verbunden ist. Verfügt "Aryl" über ein Heteroatom wie O oder S, dann kann die $(C_1 - C_6)$Alkylkette auch über das Heteroatom mit dem Siliciumatom und/oder dem Schwefelatom eine Verbindung herstellen.

Bei Angabe der Substituenten, wie z. B. $(C_1 - C_4)$ Alkoxy, bezeichnet die Zahl im Index die Anzahl aller Kohlenstoffatome im Rest.

Beispiele für die erfindungsgemäßen Sulfanylsilane gemäß Formel (I) können sein:

$(EtO)_3$-Si-$(CH_2)_3$-S-Si$(CH_3)_3$
$[(EtO)_3$-Si-$(CH_2)_3$-S$]_2$Si$(CH_3)_2$
$[(EtO)_3$-Si-$(CH_2)_3$-S$]_3$Si$(CH_3)$
$[(EtO)_3$-Si-$(CH_2)_3$-S$]_2$Si$(OEt)_2$
$[(EtO)_3$-Si-$(CH_2)_3$-S$]_4$Si
$(EtO)_3$-Si-$(CH_2)_3$-S-Si$(OEt)_3$
$(MeO)_3$-Si-$(CH_2)_3$-S-Si$(C_2H_5)_3$
$[(MeO)_3$-Si-$(CH_2)_3$-S$]_2$Si$(C_2H_5)_2$
$[(MeO)_3$-Si-$(CH_2)_3$-S$]_3$Si$(CH_3)$
$[(MeO)_3$-Si-$(CH_2)_3$-S$]_2$Si$(OMe)_2$
$[(MeO)_3$-Si-$(CH_2)_3$-S$]_4$Si
$(MeO)_3$-Si-$(CH_2)_3$-S-Si$(OMe)_3$
$(EtO)_3$-Si-$(CH_2)_2$-CH$(CH_3)$-S-Si$(CH_3)_3$
$(EtO)_3$-Si-$(CH_2)_2$-CH$(CH_3)$-S-Si$(C_2H_5)_3$
$(EtO)_3$-Si-$(CH_2)_2$-CH$(CH_3)$-S-Si$(C_6H_5)_3$
$(EtO)_3$-Si-$(CH_2)_2$-$(p$-$C_6H_4)$-S-Si$(CH_3)_3$

Ein weiterer Gegenstand der Erfindung ist ein Verfahren zur Herstellung der Sulfanylsilane der allgemeinen Formel $X_1X_2X_3$Si-A-S-Si$R_1R_2R_3$, welches dadurch gekennzeichnet ist, daß man das entsprechende Mercaptosilan $X_1X_2X_3$Si-Alkyl-SH mit Chlorsilanen Cl-Si$R_1R_2R_3$ in Gegenwart einer Base in einem organischen Lösungsmittel umsetzt, zur Vervollständigung der Reaktion die Mischung zum Sieden erhitzt, das Lösungsmittel abdestilliert und vom entstandenen festen Hydrochlorid der Base abfiltriert. Als organisches Lösungsmittel können Alkane eingesetzt werden.

Als Base können Triethylamin oder andere Amine eingesetzt werden.

Die entsprechenden Sulfanylsilane sind in der Regel danach so sauber, daß sich eine mögliche destillative Reinigung erübrigt.

Unter der Bezeichnung "Alkyl" sind sowohl "geradkettige" als auch "verzweigte" Alkylgruppen zu verstehen. Unter der Bezeichnung "geradkettige Alkylgruppe" sind beispielsweise Reste wie Methyl-, Ethyl-, n-Propyl, n-Butyl, n-Pentyl, n-Hexyl, unter "verzweigter Alkylgruppe" Reste wie beispielsweise Isopropyl oder tert.-Butyl zu verstehen. Die Bezeichnung „Halogen" steht für Fluor, Chlor, Brom oder Jod. Die Bezeichnung "Alkoxy" stellt Reste wie beispielsweise Methoxy, Ethoxy, Propoxy, Butoxy, Isopropoxy, Isobutoxy oder Pentoxy dar.

Unter "Aryl" sind im erfindungsgemäßen Rahmen $(C_1 - C_6)$alkyl-, $(C_1 - C_6)$alkoxy-, halogen- oder mit Heteroatomen wie N, O, wie Phenole, P oder S substituierte Phenyle, Biphenyle oder sonstige benzoide Verbindungen zu verstehen. "Arylalkyl" ist so zu verstehen, daß die oben bezeichneten "Aryle" über eine $(C_1 - C_6)$Alkylkette, die ihrerseits $(C_1 - C_4)$alkyl- oder halogensubstituiert sein kann, mit dem entsprechenden Siliciumatom verbunden ist. Verfügt "Aryl" über ein Heteroatom wie O oder S, dann kann die $(C_1 - C_6)$Alkylkette auch über das Heteroatom mit dem Siliciumatom eine Verbindung herstellen.

Bei Angabe der Substituenten, wie z. B. $(C_1 - C_4)$ Alkoxy, bezeichnet die Zahl im Index die Anzahl aller Kohlenstoffatome im Rest.

Die erfindungsgemäßen Sulfanylsilane eignen sich überraschenderweise besonders gut für die Verwendung in Kautschukmischungen.

Kautschukmischungen, die die erfindungsgemäßen Sulfanylsilane als Haftvermittler oder Verstärkungsadditiv enthalten und nach einem Vulkanisationsschritt resultierende Formkörper, insbesondere Luftreifen oder Reifenlaufflächen, besitzen nach der erfindungsgemäßen Durchführung der Verfahren einen niedrigen Rollwiderstand bei gleichzeitig guter Nässehaftung und hohem Abriebwiderstand.

Gegenstand der vorliegenden Erfindung sind daher Kautschukmischungen, enthaltend Kautschuk, Füllstoff, insbesondere gefällte Kieselsäure und gegebenenfalls weitere Kautschukhilfsmittel, sowie mindestens ein erfindungsgemäßes Sulfanylsilan, welches in Mengen von 0,1 bis 15 Gew-%, besonders bevorzugt 5-10 Gew.%, bezogen auf die Menge des eingesetzten oxidischen Füllstoffs, eingesetzt wird.

Bei der Verwendung des erfindungsgemäßen Sulfanylsilans in Kautschukmischungen zeigen sich gegenüber den Mischungen nach dem Stand der Technik Vorteile in den statischen und dynamischen Vulkanisatdaten.

Die Zugabe der erfindungsgemäßen Sulfanylsilans sowie die Zugabe der Füllstoffe erfolgt bevorzugt bei Massetemperaturen von 100 bis 200 °C, sie kann jedoch auch später bei tieferen Temperaturen (40 bis 100 °C) z.B. zusammen mit weiteren Kautschukhilfsmitteln erfolgen.

Das erfindungsgemäße Sulfanylsilan kann sowohl in reiner Form als auch aufgezogen auf einen inerten organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe kommen für die erfindungsgemäßen Kautschukmischungen in Frage:

- Ruße: Die hierbei zu verwendenden Ruße sind nach dem Flammruß-, Furnace- oder Gasruß-Verfahren hergestellt und besitzen BET-Oberflächen von 20 bis 200 $m^2$/g. Die Ruße können ggf. auch Heteroatome wie z.B. Si enthalten.

- hochdisperse Kieselsäuren, hergestellt z.B. durch Fällung von Lösungen von Silikaten oder Flammenpyrolyse von Siliciumhalogeniden mit spezifischen Oberflächen von 5 bis 1000, vorzugsweise 20 bis 400 $m^2$/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.

- Synthetische Silikate, wie Aluminiumsilikat, Erdalkalisilikate wie Magnesiumsilikat oder - Calciumsilikat, mit BET-Oberflächen von 20 bis 400 $m^2$/g und Primärteilchendurchmessern von 10 bis 400 nm.

- Natürliche Silikate, wie Kaolin und andere natürlich vorkommende Kieselsäuren.

- Glasfasern und Glasfaserprodukte (Matten, Stränge) oder Mikroglaskugeln.

Bevorzugt werden Ruße mit BET-Oberflächen von 20 bis 400 $m^2$/g oder hochdisperse Kieselsäuren, hergestellt durch Fällung von Lösungen von Silikaten, mit BET-Oberflächen von 20 bis 400 $m^2$/g in Mengen von 5 bis 150 Gew.-Teilen, jeweils bezogen auf 100 Teile Kautschuk, eingesetzt.

Die genannten Füllstoffe können alleine oder im Gemisch eingesetzt werden. In einer besonders bevorzugten Ausführung des Verfahrens werden 10 bis 150 Gew.-Teile helle Füllstoffe, gegebenenfalls zusammen mit 0 bis 100 Gew.-Teilen Ruß, sowie 0,1 bis 15 Gew.-Teile, bevorzugt 5 bis 10 Gew.-Teile einer Verbindung der Formel (I), jeweils bezogen auf 100 Gew.-Teile des eingesetzten Füllstoffs, zur Herstellung der Mischungen eingesetzt.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.

- Polybutadien (BR)

- Polyisopren (IR)

- Styrol/Butadien-Copolymerisate mit Styrolgehalten von 1 bis 60, vorzugsweise 2 bis 50 Gew.-% (SBR)

- Isobutylen/Isopren-Copolymerisate (IIR)

- Butadien/Acrylnitril-Copolymere mit Acrylnitrilgehalten von 5 bis 60, vorzugsweise 10 bis 50 Gew.-% (NBR)

- teilhydrierter oder vollständig hydrierter NBR-Kautschuk (HNBR)

- Ethylen/Propylen/Dien-Copolymerisate (EPDM)

sowie Mischungen dieser Kautschuke. Für die Herstellung von Kfz-Reifen sind insbesondere anionisch polymerisierte L-SBR-Kautschuke mit einer Glastemperatur oberhalb von -50 °C sowie deren Mischungen mit Dienkautschuken von Interesse.

Die erfindungsgemäßen Kautschukvulkanisate können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk. Das Sulfanylsilan kann alleine als Vernetzer dienen. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0.1 bis 5 Gew.-%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und dem erfindungsgemäßen Sulfanylsilan kann in üblichen Mischaggregaten, wie Walzen, Innenmischern und Mischextrudern, durchgeführt werden. Die erfindungsgemäßen Kautschukvulkanisate eignen sich zur Herstellung von Formkörpern, z.B. für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

Durch die Verwendung der erfindungsgemäßen Sulfanylsilane werden die Nachteile des Standes der Technik gelöst. Die erfindungsgemäßen Sulfanylsilane sind geruchsarm. Sie bewirken die gleiche Verstärkungswirkung wie die bekannten Mercaptane. Sie zeigen für sich alleine eine bessere Verarbeitungseigenschaft als bekannte Marcaptane, wie geringere Misch-Viskositäten, bessere Scorch-Sicherheit.

**Beispiele 1-5 Herstellung der Sulfanylsilane**

**Beispiel 1**

238,4 g (1,0 mol) 3-Mercaptopropyltriethoxysilan und 116,5 g (1,15 mol) Triethylamin werden nacheinander in 750 ml Petrolether gelöst. Dazu werden innerhalb von ca. 1 h eine Lösung von 108,6 g (1,0 mol) Trimethylchlorsilan in 250 ml Petrolether getropft. Die Mischung wird 4 h zum Sieden erhitzt und anschließend vom ausgefallenen Feststoff abfiltriert. Nach Abziehen des Lösungsmittels und des überschüssigen Amins im Vakuum werden 280,5 g (0,9 mol) 3-Triethoxysilyl-propylsulfanyl-trimethylsilan in 90,3 % Ausbeute als klare, leicht gelbliche Flüssigkeit erhalten.

| Analysenwerte: | | |
|---|---|---|
| Berechnet | | |
| C 46,40 | H 9,34 | S 10,32 |
| Gefunden | | |
| C 46,44 | H 10,21 | S 10,28 |

**Beispiel 2**

Es wird gemäß Beispiel 1 verfahren, wobei 64,53 g (0,50 mol) Dichlordimethylsilan anstelle von Trimethylchlorsilan eingesetzt werden. 242,76 g (0,455 mol) Dimethyl-bis-(3-triethoxysilylpropylsulfanyl)-silan in 91,1 % Ausbeute werden als klare gelbliche Flüssigkeit erhalten.

| Analysenwerte: | | |
|---|---|---|
| Berechnet | | |
| C 45,03 | H 9,08 | S 12,03 |
| Gefunden | | |
| C 45,35 | H 9,77 | S 11,77 |

**Beispiel 3**

Es wird gemäß Beispiel 1 verfahren, wobei 49,83 g (0,333 mol) Trichlormethylsilan anstelle von Trimethylchlorsilan eingesetzt werden. 239,48 g (0,317 mol) Methyl-tri-(3-triethoxysilylpropylsulfanyl)-silan in 95,1 % Ausbeute werden als klare, gelbliche Flüssigkeit erhalten.

| Analysenwerte: | | |
|---|---|---|
| Berechnet | | |
| C 44,52 | H 8,81 | S 12,73 |
| Gefunden | | |
| C 44,92 | H 9,24 | S 12,63 |

**Beispiel 4**

Es wird gemäß Beispiel 1 verfahren, wobei 42,47 g (0,250 mol) Tetrachlorsilan anstelle von Trimethylchlorsilan eingesetzt werden. 224,4 g (0,229 mol) Tetra-(3-triethoxysilylpropylsulfanyl)-silan in 91,8 % Ausbeute werden als klare, gelbliche Flüssigkeit erhalten.

| Analysenwerte: | | |
|---|---|---|
| Berechnet | | |
| C 44,22 | H 8,66 | S 13,12 |
| Gefunden | | |
| C 44,98 | H 9,16 | S 13,06 |

**Beispiel 5**

Es wird gemäß Beispiel 1 verfahren, wobei 198,73 g (1,0 mol) Triethoxychlorsilan anstelle von Trimethylchlorsilan eingesetzt werden. 372,63 g (0,930 mol) 3-Triethoxysilylpropylsulfanyl-triethoxylsilan in 93,0 % Ausbeute werden als klare, gelbliche Flüssigkeit erhalten.

| Analysenwerte: | | |
|---|---|---|
| Berechnet | | |
| C 44,96 | H 9,06 | S 8,0 |
| Gefunden | | |
| C 45,34 | H 9,54 | S 8,24 |

**Beispiele 6, 7:** Gummitechnische Prüfung

Beispiele 6 (Vergleichsbeispiel) und 7 zeigen die Vorteile der erfindungsgemäßen Sulfanylsilane hinsichtlich einer verbesserten Verarbeitbarkeit gegenüber dem nach Stand der Technik verwendeten Mercaptosilan.
Die für die Kautschukmischungen verwendete allgemeine Rezeptur ist in folgender Tabelle 1 angegeben. Dabei bedeutet die Einheit phr Gewichtsanteile, bezogen auf 100 Teile des eingesetzten Rohkautschuks.

Tabelle 1

| Substanz | Menge [phr] |
|---|---|
| 1. Stufe | |
| Buna AP 341 | 100.0 |
| Ultrasil VN3 | 50.0 |
| Silan | variabel |
| ZnO | 5.0 |
| Stearinsäure | 1.0 |
| Renopal NS | 10.0 |
| Protector G35P | 1.0 |
| 2. Stufe | |
| Batch Stufe 1 | |
| Vulkacit Mercapto C | 0.75 |
| Vulkacit Thiuram C | 1.5 |
| Schwefel | 1.5 |

Bei dem Polymer Buna AP 341 handelt es sich um EPDM der Firma Hüls.

Die Kieselsäure VN3 der Degussa AG weist eine BET-Oberfläche von 175 m$^2$ auf.

Als Weichmacher wird Renopal NS der Fuchs Mineralöl-Werke GmbH Duisburg verwendet. Vulacit Mercapto C (MBT) und Vulkacit Thiuram C (TMTD) sind Handelsprodukte der Rhein-Chemie GmbH Mannheim.

Die Kautschukmischung wird zweistufig in einem Innenmischer entsprechend der Angaben in der Tabelle 2 hergestellt:

Tabelle 2

| Stufe 1 | | |
|---|---|---|
| **Einstellungen** | | |
| Mischaggregat | | Werner & Pfleiderer GK 1.5E |
| Friktion | | 1:1 |
| Drehzahl | | 70 min-1 |
| Stempeldruck | | 5.5 bar |
| Leervolumen | | 1.58 L |
| Füllgrad | | 0.55 |
| Durchflußtemperatur | | 60 °C |
| **Mischvorgang** | | |
| 0 bis | 1 min | Buna AP 341 |
| 1 bis | 3 min | Ultrasil VN3, ZnO, Stearinsäure, Renopal NS, Silan |
| | 3 min | säubern |
| 3 bis | 5 min | mischen und ausfahren |
| Batch-Temperatur | | 140-145 °C |
| Lagerung | | 24 h bei Raumtemperatur |
| | | |
| Stufe 2 | | |
| **Einstellungen** | | |
| Mischaggregat | | wie in Stufe 1 bis auf |
| Drehzahl | | 40 min |
| Füllgrad | | 0.51 |
| Durchflußtemperatur | | 50 °C |
| **Mischvorgang** | | |
| 0 bis | 2 min | Batch Stufe 2 + Vulkacit Mercapto C + Vulkacit Thiuram C + Schwefel |
| | 2 min | ausfahren und auf Labormischwalzwerk Fell bilden |
| | | (Durchmesser 200 mm, Länge 450 mm, Durchflußtemperatur 50 °C) |
| | | anschließend ein Fell ausziehen |
| Batch-Temperatur | | 100-110 °C |

Die Vulkanisationszeit für die Prüfkörper beträgt 60 Minuten bei 170 °C.

Die gummitechnische Prüfung erfolgt gemäß den in Tabelle 3 angegebenen Prüfmethoden.

Tabelle 3

| Physikalische Testung | Norm/ Bedingungen |
|---|---|
| ML 1+4, 100 °C | DIN 53523/3, ISO 667 |
| Vulkameterprüfung, 165 °C | DIN 53529/3, ISO 6502 |
| Zugversuch am Ring, 23 °C | DIN 53504, ISO 37 |

Tabelle 3 (fortgesetzt)

| Physikalische Testung | Norm/ Bedingungen |
|---|---|
| Zugfestigkeit<br><br>Spannungswerte<br><br>Bruchdehnung | |
| Shore-A-Härte, 23 °C | DIN 53 505 |
| Ball-Rebound, 0 und 60 °C | ASTM D 5308 |
| Viskoelastische Eigenschaften, 0 und 60 °C, 16 Hz, 50 N Vorkraft und 25 N Amplitudenkraft<br><br>Komplexer Modul E*,<br><br>Verlustfaktor tan δ | DIN 53 513, ISO 2856 |
| Goodrich-Flexometer, 25 min bei 23 °C und 0.175 inch Hub | DIN 53 533, ASTM D 623 A |
| DIN-Abrieb, 10 N Kraft | DIN 53 516 |
| Druckverformungsrest DVR, 22 h bei 70 °C | DIN 53 517, ISO 815 |
| Dispersion | ISO/DIS 11345 |

In Vergleichsbeispiel 6 werden der Mischung 2.4 Teile KBM-803, ein 3-Mercaptopropyltrimethoxysilan, erhältlich bei der Shin-Etsu, zugegeben.

In Beispiel 7 werden 3.8 Teile des Sulfanylsilans gemäß Beispiel 1 verwendet. Dies entspricht einer äquimolaren Dosierung, bezogen auf das Mercaptosilan in Vergleichsbeispiel 6.

Die folgenden gummitechnischen Daten für Rohmischung und Vulkanisat werden ermittelt (Tabelle 4):

Tabelle 4

| Rohmischungsergebnisse | | | |
|---|---|---|---|
| Merkmal: | Einheit | Beispiel 6 | Beispiel 7 |
| **MDR 150 °C** | | | |
| D120-Dmin | [dNm] | 19.6 | 26.7 |
| t 10% | [min] | 1.02 | 1.90 |
| t 90% | [min] | 75.1 | 70.2 |
| Marching Modulus | [%] | 16 | 13 |
| ML 1+4 100 °C 2. Stufe | [ME] | 120 | 101 |
| **Vulkanisatergebnisse** | | | |
| Merkmal: | Einheit | 1 | 2 |
| **Zugversuch am Ring** | | | |
| Zugfestigkeit | [MPa] | 12.3 | 16.9 |
| Spannungswert 100 % | [MPa] | 2.4 | 2.5 |
| Spannungswert 300 % | [MPa] | 8.3 | 9.1 |
| Bruchdehnung | [%] | 400 | 460 |
| Bruchenergie | [J] | 71.6 | 108.7 |
| Shore-A-Härte (23 °C) | [SH] | 70 | 73 |
| DIN-Abrieb | [mm$^3$] | 96 | 96 |
| DVR 22h bei 70 °C | [%] | 25.7 | 20.8 |

Wie die Tabelle 4 zeigt, ergibt das erfindungsgemäße Sulfanylsilan eine niedrigere Mischungsviskosität und ein verbessertes Anvulkanisationsverhalten (t10%). Zudem werden bei äquimolarer Dosierung höhere Spannungswerte und Zugfestigkeiten erreicht sowie ein niedrigerer Druckverformungsrest gefunden.

**Beispiele 8-9**

Die Beispiele 8 bis 9 zeigen, daß die Verwendung der erfindungsgemäßen Sulfanylsilane zu einer höheren Kopplungsausbeute zwischen Kieselsäure und Kautschuk führt. Dies zeigt sich in höheren Spannngswerten und einem verbesserten Hystereseverhalten.

Die verwendete Rezeptur ist in der Tabelle 5 angegeben. Dabei bedeutet die Einheit phr Gewichtsanteile, bezogen auf 100 Teile des eingesetzten Rohkautschuks.

Tabelle 5

| Substanz | Menge [phr] |
|---|---|
| 1. Stufe | |
| Buna VSL 5025-1 | 96.0 |
| Buna CB 24 | 30.0 |
| Ultrasil VN3 | 80.0 |
| ZnO | 3.0 |
| Stearinsäure | 2.0 |
| Naftolene ZD | 10.0 |
| Vulkanox 4020 | 1.5 |
| Protector G35P | 1.0 |
| TESPD | 6.4 |
| 2. Stufe Batch Stufe 1 3. Stufe | |
| Batch Stufe 2 | |
| Vulkacit D | 2.0 |
| Vulkacit CZ | 1.5 |
| Schwefel | 2.1 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100 °C) von etwa 50 auf.

Bei dem Polymer Buna CB 24 handelt es sich um ein cis 1,4 Polybutadien (Titantyp) der Bayer AG mit cis 1,4-Gehalt von 92 %, einem trans 1,4-Gehalt von 4 %, einem 1,2-Gehalt von 4 % und einer Mooney-Viskosität zwischen 44 und 50.

Die Kieselsäure VN3 der Degussa AG besitzt eine BET-Oberfläche von 175 m$^2$.

Bis-(3-[Triethoxysilyl]-propyl)disulfan (TESPD) wird gemäß Patent DB 197 34 295 hergestellt und weist einen Disulfangehalt von > 80 % auf.

Als aromatisches Öl wird Naftolen ZD der Chemetall verwendet. Bei Vulkanox 4020 handelt es sich um PPD der Bayer AG. Protektor G35P ist ein Ozonschutzwachs der HB-Fuller GmbH. Vulkacit D (DPG) und Vulkacit CZ (CBS) sind Handeisprodukte der Bayer AG.

Die Kautschukmischung wird dreistufig in einem Innenmischer entsprechend der Tabelle 6 hergestellt:

Tabelle 6

| Stufe 1 | | |
|---|---|---|
| **Einstellungen** | | |
| Mischaggregat | | Werner & Pfleiderer GK 1.5E |
| Friktion | | 1:1,11 |
| Drehzahl | | 70 min-1 |
| Stempeldruck | | 5.5 bar |
| Leervolumen | | 1.6 L |
| Füllgrad | | 0.55 |
| Durchflußtemperatur | | 80 °C |
| **Mischvorgang** | | |
| 0 bis | 1 min | Buna VSL 5025-1 + Buna CB 24 |
| 1 bis | 3 min | 1/2 Ultrasil VN3, ZnO, Stearinsäure, Naftolen ZD, Silan |
| 3 bis | 4 min | 1/2 Ultrasil VN3, Vulkanox 4020, Protector G35P |
| | 4 min | säubern |
| 4 bis | 5 min | mischen |
| | 5 min | säubern |
| 5 bis | 6 min | mischen und ausfahren |
| Batch-Temperatur | | 140-150 °C |
| Lagerung | | 24 h bei Raumtemperatur |

| Stufe 2 | | |
|---|---|---|
| **Einstellungen** | | |
| Mischaggregat | | wie in Stufe 1 bis auf: |
| Drehzahl | | 80 min |
| Füllgrad | | 0.53 |
| Durchflußtemperatur | | 80 °C |
| **Mischvorgang** | | |
| 0 bis | 2 min | Batch Stufe 1 aufbrechen |
| 2 bis | 5 min | Batchtemperatur 150 °C durch Drehzahlvariation halten |
| | 5 min | ausfahren |
| Batch-Temperatur | | 150 -155 °C |
| Lagerung | | 4 h bei Raumtemperatur |

| Stufe 3 | | |
|---|---|---|
| **Einstellungen** | | |
| Mischaggregat | | wie in Stufe 1 bis auf |
| Drehzahl | | 40 min |

Tabelle 6

| Stufe 3 | | |
|---|---|---|
| Füllgrad | | 0.51 |
| Durchflußtemperatur | | 50 °C |
| **Mischvorgang** | | |
| 0 bis | 2 min | Batch Stufe 2 + Vulkacit CZ + Vulkacit D + Schwefel |
| | 2 min | ausfahren und auf Labormischwalzwerk Fell bilden |
| | | (Durchmesser 200 mm, Länge 450 mm, Durchflußtemperatur 50 °C) |
| | | Homogenisieren: |
| | | 3* links, 3* rechts einschneiden und umklappen sowie |
| | | 8* bei engem Walzenspalt (1 mm) und |
| | | 3* bei weitem Walzenspalt (3,5 mm) stürzen und |
| | | anschließend ein Fell ausziehen |
| Batch-Temperatur | | 90-100 °C |

Das allgemeine Verfahren zur Herstellung von Kautschukmischungen und deren Vulkanisate ist in dem folgeden Buch beschrieben: „Rubber Technology Handbook", W. Hofmann, Hanser Verlag 1994.

Die Vulkanisationszeit für die Prüfkörper beträgt 50 Minuten bei 165 °C.

Die gummitechnische Prüfung erfolgt gemäß den in Tabelle 3 angegebenen Prüfmethoden.

Gemäß Vergleichsbeispiel 8 wird der Mischung in dem Beispiel 9 anstatt 6.4 Teile Bis-[3-Triethoxysilyl]-propyl)disilan (TESPD), 8.4 Teile der erfindungsgemäßen Organosiliciumverbindung (Sulfanylsilan) aus Beispiel 1 zugesetzt. Dies entspricht einer äquimolaren Dosierung bezüglich der Triethoxysilyleinheiten.

Die ermittelten gummitechnischen Daten für Rohmischung und Vulkanisat sind in der Tabelle 7 dargestellt:

Tabelle 7

| Rohmischungsergebnisse | | | |
|---|---|---|---|
| Merkmal: | | Beispiel 8 | Beispiel 9 |
| **MDR 165 °C** | | | |
| Dmax-D120 | [dNm] | 16.3 | 11.0 |
| t 10% | [min] | 2.00 | 0.49 |
| t 90% | [min] | 13.3 | 15.75 |
| Marching Modulus | [%] | 2.2 | 2.1 |
| **Vulkanisatergebnisse** | | | |
| Merkmal: | Einheit | 6 | 7 |
| **Zugversuch am Ring** | | | |
| Zugfestigkeit | [MPa] | 13.7 | 13.2 |
| Spannungswert 100 % | [MPa] | 2.5 | 2.2 |
| Spannungswert 300 % | [MPa] | 12.4 | 13.6 |
| Bruchdehnung | [%] | 320 | 290 |
| Bruchenergie | [J] | 57.1 | 47.6 |
| Shore-A-Härte (23 °C) | [SH] | 66 | 59 |
| Ball-Rebound (0 °C) | [%] | 11.1 | 10.0 |
| Ball-Rebound (60 °C) | [%] | 58.4 | 65.8 |
| DIN-Abrieb | [mm] | 63 | 45 |
| **Viskoelastische Prüfung** | | | |
| Dyn. Dehnmodul E* (0 °C) | [MPa] | 24.2 | 17.2 |
| Dyn. Dehnmodul E* (60 °C) | [MPa] | 8.3 | 7.5 |
| Verlustfaktor tan δ (0 °C) | [-] | 0.493 | 0.473 |
| Verlustfaktor tan δ (60 °C) | [-] | 0.119 | 0.103 |
| Dispersion | [-] | 8 | 8 |

Wie man anhand Tabelle 7 erkennt, führt die Verwendung des erfindungsgemäßen Sulfanylsilans gemäß Beispiel 1 trotz niedriger Härte der Mischung zu ähnlichen Spannungs- und einem niedrigeren Abriebswert. Zudem findet man einen deutlich günstigeren tan δ (60 °C) Wert, ein Maß für den Energieverlust bei der dynamischen Belastung. Dies belegt die höhere Kieselsäure-Kautschuk-Kopplungsausbeute aufgrund des erfindungsgemäßen Sulfanylsilans.

**Patentansprüche**

1.  Sulfanylsilane, gekennzeichnet dadurch, daß sie der allgemeinen Formel I

$$X^1X^2X^3\text{Si-A-S-Si}R^1R^2R^3 \qquad\qquad\text{(I)}$$

entsprechen, wobei

$X^1$, $X^2$, $X^3$    unabhängig voneinander, H, $(C_1\text{-}C_8)$Alkyl, $(C_1\text{-}C_8)$Alkoxy, $(C_1\text{-}C_4)$Haloalkyl, Aryl, $(C_7\text{-}C_{16})$Aralkyl, Halogen, -A-S-Si$R^1R^2R^3$

$R^1$, $R^2$, $R^3$    unabhängig voneinander, H, $(C_1\text{-}C_{16})$ Alkyl, $(C_1\text{-}C_{16})$Alkoxy, $(C_1\text{-}C_{16})$Haloalkyl, Aryl, $(C_7\text{-}C_{16})$Aral-

**14**

kyl, Halogen, $X^1X^2X^3$-A-S

A    $(C_1-C_{16})$Alkyl, das jeweils linear oder verzweigt gesättigt oder ungesättigt und gegebenenfalls mit $(C_1-C_4)$Alkyl, $(C_1-C_4)$Alkoxy, Halogen, Nitril, $(C_1-C_4)$Haloalkyl, $NO_2$, $(C_1-C_4)$Thioalkyl, $NR^1R^2$, -A-S-$SiR^1R^2R^3$ oder $X^1X^2X^3$-A-, substituiert sein kann, Aryl oder $(C_7-C_{16})$Aralkyl,

bedeuten kann.

2. Sulfanylsilane gemäß Anspruch 1, dadurch gekennzeichnet, daß

$X^1, X^2, X^3$    unabhängig voneinander, $(C_1-C_4)$Alkyl, $(C_1-C_4)$Alkoxy, Halogen

$R^1, R^2, R^3$    unabhängig voneinander, $(C_1-C_4)$Alkyl, $(C_1-C_4)$Alkoxy, Halogen oder $X^1X^2X^3Si$-A-S
und

A    $(C_1-C_4)$Alkyl

bedeutet.

3. Sulfanylsilane gemäß Anspruch 1, dadurch gekennzeichnet, daß

$X^1, X^2, X^3$    unabhängig voneinander, Methoxy oder Ethoxy,

$R^1, R^2, R^3$    unabhängig voneinander, Methyl oder $X^1X^2X^3Si$-A-S
und

A    Propyl

bedeutet.

4. Verfahren zur Herstellung der Sulfanylsilane der allgemeinen Formel $X_1X_2X_3Si$-Aklyl-S-$SiR_1R_2R_3$ gemäß der Ansprüche 1 bis 3, dadurch gekennzeichnet, daß man das entsprechende Mercaptosilan $X_1X_2X_3Si$-Alkyl-SH mit Chlorsilanen Cl-$SiR_1R_2R_3$ in Gegenwart einer Base in einem organischen Lösungsmittel umsetzt, zur Vervollständigung der Reaktion die Mischung zum Sieden erhitzt, das Lösungsmittel abdestilliert und vom entstandenen festen Hydrochlorid der Base abfiltriert.

5. Kautschukmischungen, enthaltend Kautschuk, oxidischen Füllstoff, insbesondere gefällte Kieselsäure und gegebenenfalls weitere Kautschukhilfsmittel sowie mindestens ein Sulfanylsilan gemäß Ansprch 1 in einer Menge von 0,1 bis 15 Gew.-%, bezogen auf die Menge des eingesetzten oxidischen Füllstoffes.